# EUROPEAN PATENT SPECIFICATION

(11) **EP 0 445 992 B1**
(45) Date of publication and mention of the grant of the patent: **22.05.1996**
(21) Application number: 91301742.2
(22) Date of filing: 01.03.1991
(51) Int. Cl.: B29C 51/36, B29C 51/10, B29C 44/00

(54) **Device for controlled application of a differential vacuum to a mould**
Vorrichtung zum kontrollierten Aufbringen eines ungleichmässigen Vakuums auf eine Form
Dispositif pour la production d'un vide irrégulier sur moule en le réglant

(30) Priority: 07.03.1990 GB 9005062
(43) Date of publication of application: 11.09.1991
(73) Proprietor: DUNLOP LIMITED, London SW1P 2PL (GB)
(72) Inventor: Rogers, David Michael, Harrogate, North Yorkshire (GB); Wilson, George Shepherd, Harrogate, North Yorkshire (GB)
(74) Representative: Sparrow, Alvar Alfred

(56) References cited:
- EP-A- 0 099 306
- EP-A- 0 298 339
- DE-A- 2 404 215
- US-A- 4 087 224
- US-A- 4 552 522

## Description

This invention relates to a vacuum-mould having a device for the controlled application of a differential vacuum to the mould cavity, for vacuum-moulding of sheet material.

The present invention will be described herein with particular reference to a vacuum-mould for the production of "trim-covered" components, but is not to be construed as being limited thereto.

By "trim-covered components" is meant articles comprising a resilient core having an integral cover of a fabric or other sheet material. A commonly-encountered example of such an article is a seating component (e g for use in a motor vehicle). Articles of this type frequently have a relief-patterned configuration (for example moulded grooves) and the integral cover may consist of a multilayer laminate or of several pieces of different materials sewn together in sheet form.

Conventionally, "trim-covered" articles are made by means of a vacuum-moulding process, in which the fabric or other sheet material which will form the cover of the article is laid over the mouth of the mould, a vacuum is applied to draw the fabric into contact with the mould cavity and the mould is filled with, for example, a foam-forming reaction mixture.

Conventional vacuum-moulds include a single vacuum chamber, of large volume relative to the volume of the mould cavity, together with a series of through-holes (hereinafter described as vacuum-holes) extending between the mould cavity and the vacuum-chamber. When a cover sheet material such as a fabric is placed across the mouth of such a mould and a vacuum applied, the response of the sheet material is slow and cannot readily be controlled. This disadvantage is especially noticeable where the cover sheet material consists of more than one layer or of several pieces of different materials. The application of an uncontrolled vacuum to such a material can result in bow and skew and in the fabric becoming "stretched" or "bunched" or otherwise not uniformly positioned against the mould cavity surface.

A proposal for shaping a stretchable sheet material by vacuum-moulding in a manner to provide uniform stretching of the material during moulding is described in US-A-4087224 which shows a vacuum-mould according to the preamble of claim 1. In that proposal, the mould cavity surface is provided by a shaped side of a large hollow mould box which is divided into two or more chambers of different gas pressures to provide a differential gas pressure via apertures (holes) through the box side and thereby to create a gas flow, or 'air cushion', between the sheet material and the cavity surface during moulding.

The present invention provides a vacuum-mould which eliminates the need for a mould box or chamber and which produces moulded sheet material shaped accurately in conformity with a mould cavity surface comprising changes in direction such as corner depressions (forming projections in the moulded sheet material) and divider projections (forming grooves in the moulded sheet material).

In accordance with the present invention, the vacuum-mould comprises vacuum sources in the form of ports incorporated within the casing structural wall of the mould cavity and communicating with the mould cavity by vacuum-holes. Furthermore, where there is a change in direction of the mould cavity surface, a port is located at a position within the mould cavity casing wall corresponding to that change in direction, thereby providing a vacuum source dedicated to that change in direction.

In particular, according to the present invention there is provided a vacuum-mould for vacuum-moulding sheet material such as in the production of a trim-covered component, said mould having a device for application of a differential vacuum to the mould cavity, said device comprising a plurality of vacuum sources in communication with the mould cavity by means of vacuum-holes, characterised in that the device comprises vacuum sources in the form of vacuum ports, of small volume relative to the volume of the mould cavity, incorporated within the structural wall of the mould cavity casing, wherein a vacuum-port is located at a position in the mould cavity casing wall corresponding to a change in direction of the surface of the mould cavity and wherein at least one vacuum-hole directly communicates the vacuum-port with the mould cavity at a change in direction of the surface of the mould cavity.

The present invention further provides a method of making a moulded sheet material or trim-covered component, for instance a seating component, e g for use in a motor vehicle, by a vacuum-moulding process comprising laying a sheet material (such as material to provide the cover of a trim-covered component) over the mouth of a vacuum-mould described in the immediately-preceding paragraph and applying a controlled differential vacuum via the vacuum-holes to draw the sheet material into conformity with the mould cavity surface.

In one embodiment of the present invention, each said vacuum-port may constitute part of a multi-directional vacuum manifold.

In a preferred embodiment, a vacuum-port with communicating vacuum-hole(s) is located at a position corresponding to each change in direction of the surface of the mould cavity, for example at each corner and, if present, at each internal divider.

It is especially convenient for a pair of vacuum-holes to extend from the vacuum-port adjacent a divider, one member of each pair of holes entering the mould cavity on each side of its corresponding divider.

At least one of the vacuum-ports may be supplied with a differential vacuum relative to other vacuum-ports.

The present invention will be illustrated, merely by way of example, in the following description and with reference to the accompanying drawings.

In the drawings (wherein like numerals denote like parts):

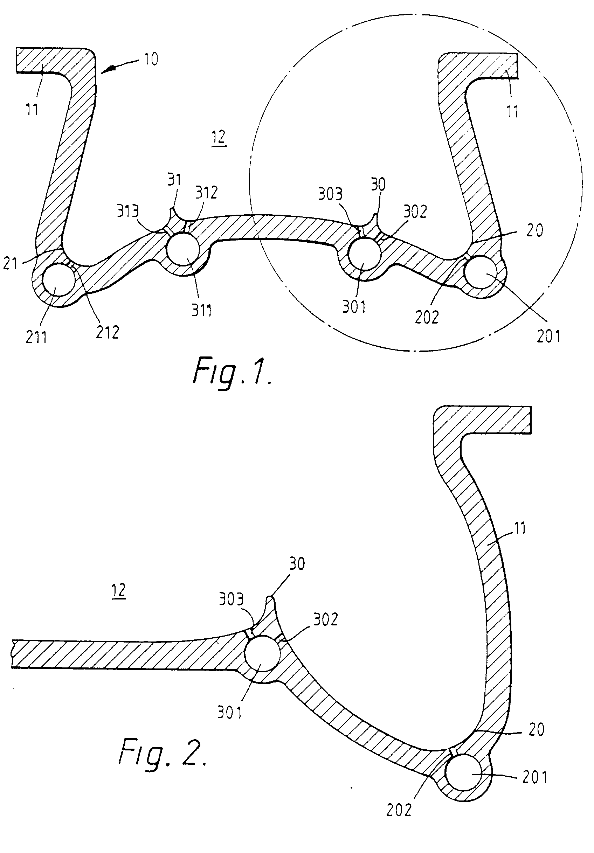

- Figure 1: is a schematic sectional view of a mould including a device according to the present invention;
- Figure 2: is an enlarged view of the "circled" portion of Figure 1.

Referring to the drawings, a vacuum-mould 10 includes a mould casing 11 and a cavity 12. The cavity as shown includes two corners 20 and 21 and two internal dividers 30 and 31.

Vacuum-ports 201 and 211 are incorporated within the structural wall of the mould casing 11, at positions corresponding to the corners 20 and 21 respectively. Communication between ports 201 and 211 and the mould cavity 12 is by means of vacuum-holes 202 and 212 respectively.

Vacuum-ports 301 and 311 are similarly incorporated within the structural wall of the mould casing 11, at positions corresponding to the dividers 30 and 31 respectively. Each of the ports 301 and 311 communicates with the mould cavity 12 by means of a pair of vacuum-holes 302,303 and 312,313 respectively, one member of each pair of holes entering the cavity on each side of its corresponding divider.

## Claims

1. Vacuum-mould for vacuum-moulding sheet material such as in the production of a trim-covered component, said mould having a device for application of a differential vacuum to the mould cavity (12), said device comprising a plurality of vacuum sources in communication with the mould cavity by means of vacuum-holes, characterised in that the device comprises vacuum sources in the form of vacuum-ports (201;211;301;311), of small volume relative to the volume of the mould cavity (12), incorporated within the structural wall of the mould cavity casing (11), wherein a vacuum-port (201;211;301;311) is located at a position in the mould cavity casing wall corresponding to a change in direction (20;21;30;31) of the surface of the mould cavity (12) and wherein at least one vacuum-hole (202;212;302;303;312;313) directly communicates the vacuum-port with the mould cavity at a change in direction of the surface of the mould cavity.

2. Vacuum-mould according to Claim 1, in which a vacuum-hole (202;212) communicates a corner (20;21) change in direction of the mould cavity surface with the correspondingly located vacuum-port (201;211).

3. Vacuum-mould according to Claim 1 or Claim 2, in which the mould cavity surface includes one or more internal dividers (30;31), and a vacuum-port (301;311) is located at a position corresponding to each of said dividers.

4. Vacuum-mould according to Claim 3, in which said vacuum-port communicates with the mould cavity (12) by means of a pair of vacuum-holes (302,303;312,313) one member of each said pair of vacuum-holes entering the mould cavity on each side of its corresponding divider (30,31).

5. Vacuum-mould according to any of the preceding Claims, in which a vacuum-port constitutes part of a multi-directional vacuum manifold.

6. Vacuum-mould according to any of the preceding Claims, in which a vacuum-port is supplied with a controlled vacuum different to that supplied to another vacuum-port, whereby a controlled differential vacuum is applied to the mould cavity.

7. Method of making a moulded sheet material by a vacuum-moulding process comprising laying the sheet material over the mouth of a vacuum-mould (10) defined in any of the preceding Claims and applying a controlled differential vacuum via the vacuum-holes to draw the sheet material into conformity with the mould cavity surface.

8. Method of making a trim-covered component by a vacuum-moulding process comprising laying a cover sheet material over the mouth of a vacuum-mould (10) defined in any of Claims 1 to 6 and applying a controlled differential vacuum via the vacuum-holes to draw the sheet material into conformity with the mould cavity surface.

9. Method according to Claim 8, in which, after the sheet material has been drawn into conformity with the mould cavity surface, a foam-forming reaction mixture is applied onto the moulded sheet material to form a resilient core of the trim-covered component.

10. Method according to Claim 7, 8 or 9, in which the sheet material is a multilayer laminate or comprises several pieces of different materials.

## Patentansprüche

1. Vakuumform zum Vakuumformen von Bahnmaterial, wie z.B. bei der Herstellung von beschichteten Elementen, wobei die Form eine Vorrichtung zum Aufbringen eines ungleichmäßigen Vakuums auf den Formhohlraum (12) aufweist und die Vorrichtung eine Anzahl von Vakuumquellen umfaßt, die mit dem Formhohlraum mittels Vakuumöffnungen in Verbindung stehen,
**dadurch gekennzeichnet**,
daß die Vorrichtung Vakuumquellen in der Form von Vakuumkanälen (201; 211; 301; 311) aufweist, die ein kleines Volumen relativ zum Volumen des Formhohlraums (12) haben und innerhalb des Wandaufbaus des Gehäuses (11) des Formhohlraums ausgebildet sind, wobei ein Vakuumkanal (201; 211; 301; 311) an einer Stelle in der Gehäusewand des Formhohlraums angeordnet ist, die einer Änderung in der Richtung der Oberfläche (20; 21; 30; 31) des Formhohlraums (12) entspricht, und wobei wenigstens eine Vakuumöffnung (202; 212; 302; 303; 312; 313) den Vakuumkanal direkt mit dem Formhohlraum an einer Änderung der Richtung der Oberfläche des Formhohlraums verbindet.

2. Vakuumform nach Anspruch 1, bei der eine Vakuumöffnung (202; 212) eine Richtungsänderung der Oberfläche des Formhohlraums in Form einer Ecke (20; 21) mit dem entsprechend angeordneten Vakuumkanal (201; 211) verbindet.

3. Vakuumform nach Anspruch 1 oder 2, wobei die Oberfläche des Formhohlraumes eine oder mehrere Unterteilungen (30; 31) aufweist und ein Vakuumkanal (301; 311) an einer Stelle angeordnet ist, die jeweils einer solchen Unterteilung entspricht.

4. Vakuumform nach Anspruch 3, bei der der Vakuumkanal mit dem Formhohlraum (12) über ein Paar von Vakuumöffnungen (302, 303; 312, 313) in Verbindung steht, wobei jeweils eine Öffnung eines solchen Paares von Vakuumöffnungen, die in den Formhohlraum münden, auf jeder Seite der entsprechenden Unterteilung (30; 31) ausgebildet ist.

5. Vakuumform nach irgendeinem der vorhergehenden Ansprüche, wobei ein Vakuumkanal einen Teil eines in mehrere Richtung laufenden Vakuumverteilers bildet.

6. Vakuumform nach einem der vorhergehenden Ansprüche, wobei ein Vakuumkanal mit einem gesteuertem Vakuum beaufschlagt wird, daß unterschiedlich zu dem ist, das an einem anderen Vakuumkanal anliegt, so daß ein gesteuertes bzw. kontrolliertes ungleichmäßiges Vakuum an dem Formhohlraum angelegt wird.

7. Verfahren zum Herstellen eines geformten Bahnmaterials durch einen Vakuumformvorgang, umfassend das Auslegen des Bahnmaterials über die Öffnung einer Vakuumform (10), wie sie in irgendeinem der vorhergehenden Ansprüchen angegeben ist, und Anlegen eines kontrollierten, unterschiedlichen Vakuums über die Vakuumöffnungen, um das Bahnmaterial an der Oberfläche des Formhohlraumes durch Einziehen anzulegen.

8. Verfahren zum Herstellen eines beschichteten Elementes durch ein Vakuumformverfahren, umfassend das Auflegen eines Deckschichtmaterials über die Öffnung einer Vakuumform (10) wie sie in irgendeinem der Ansprüche 1 bis 6 angegeben ist, und Anlegen eines kontrollierten, unterschiedlichen Vakuums über die Vakuumöffnungen, um das Bahnmaterial an die Oberfläche des Formhohlraums durch Einziehen anzulegen.

9. Verfahren nach Anspruch 8, wobei nach dem Einziehen des Bahnmaterials und Anlegen an der Oberfläche des Formhohlraums ein schaumbildendes Reaktionsgemisch auf das geformte Bahnmaterial aufgebracht wird, um einen federnd nachgiebigen Kern des beschichteten Elementes zu bilden.

10. Verfahren nach Anspruch 7, 8 oder 9, wobei das Bahnmaterial ein mehrlagiges Laminat ist oder mehrere Teile aus unterschiedlichen Materialien umfaßt.

## Revendications

1. Moule de moulage sous vide pour réaliser un moulage sous vide d'une matière en feuille, comme celle utilisée pour la fabrication d'un élément recouvert d'une housse de garnissage, par exemple, ledit moule étant équipé d'un dispositif destiné à appliquer un vide différentiel à la cavité (12) du moule, ledit dispositif comprenant plusieurs sources de vide en communication avec la cavité du moule par l'intermédiaire de trous à vide, caractérisé en ce que le dispositif comprend des sources de vide qui se présentent sous la forme de canaux à vide (201; 211; 301; 311) de volume faible par rapport au volume de la cavité (12) du moule, incorporés dans la paroi structurale de l'enveloppe (11) de la cavité du moule, un canal à vide (201; 211; 301; 311) étant situé au niveau d'une position de l'enveloppe de la cavité du moule, qui correspond à un changement de direction (20; 21; 30; 31) de la surface de la cavité (12) du moule, tandis qu'au moins un trou à vide (202; 212; 302; 303; 312; 313) établit une communication directe entre le canal à vide et la cavité du moule au niveau d'un changement de direction de la surface de la cavité du moule.

2. Moule de moulage sous vide selon la revendication 1, dans lequel un trou à vide (202; 212) met en communication un angle (20; 21) définissant un changement de direction de la surface de la cavité du moule avec le canal à vide (201; 211) positionné d'une manière correspondante.

3. Moule de moulage sous vide selon la revendication 1 ou la revendication 2, dans lequel la surface de la cavité du moule comprend un ou plusieurs organes de séparation internes (30; 31), un canal à vide (301; 311) étant situé au niveau d'une position correspondant à chacun desdits organes de séparation.

4. Moule de moulage sous vide selon la revendication 3, dans lequel ledit canal à vide communique avec la cavité (12) du moule par l'intermédiaire de deux trous à vide (302, 303; 312, 313), un élément de chacune desdites paires de trous à vide débouchant dans la cavité du moule de chaque côté de son organe de séparation (30; 31) correspondant.

5. Moule de moulage sous vide selon l'une quelconque des revendications précédentes, dans lequel un canal à vide fait partie d'un distributeur de vide à directions multiples.

6. Moule de moulage sous vide selon l'une quelconque des revendications précédentes, dans lequel un canal à vide est alimenté avec un vide contrôlé différent de celui fourni à un autre canal à vide, pour qu'ainsi un vide différentiel contrôlé soit appliqué à la cavité du moule.

7. Méthode de production d'une matière en feuille moulée par un procédé de moulage sous vide, comprenant la pose de la matière en feuille au-dessus de l'ouverture d'un moule de moulage sous vide (10) défini dans l'une quelconque des revendications précédentes, et l'application d'un vide différentiel contrôlé par l'intermédiaire des trous à vide afin d'aspirer la matière en feuille pour qu'elle épouse la forme de la surface de la cavité du moule.

8. Méthode de fabrication d'un élément recouvert d'une housse de garnissage par un procédé de moulage sous vide, comprenant la pose d'une matière en feuille de recouvrement au-dessus de l'ouverture d'un moule de moulage sous vide (10) défini dans l'une quelconque des revendications 1 à 6, et l'application d'un vide différentiel contrôlé par l'intermédiaire des trous à vide afin d'aspirer la matière en feuille pour qu'elle épouse la forme de la surface de la cavité du moule

9. Méthode selon la revendication 8, suivant laquelle, après que la matière en feuille a été aspirée pour épouser la forme de la surface de la cavité du moule, un mélange réactif de formation de mousse est appliqué sur la matière en feuille moulée pour former une partie centrale élastique de l'élément recouvert d'une housse de garnissage.

10. Méthode selon la revendication 7, 8 ou 9, suivant laquelle la matière en feuille est un stratifié multicouche ou comprend plusieurs morceaux de matières différentes.
